# EUROPÄISCHE PATENTANMELDUNG

(11) **EP 2 103 816 A2**
(43) Veröffentlichungstag der Anmeldung: **23.09.2009**
(21) Anmeldenummer: 09155159.8
(22) Anmeldetag: 13.03.2009
(51) Int. Cl.: F15B 15/20

(54) **Hydraulikzylinderanordnung**

(30) Priorität: 18.03.2008 DE 102008014845
(71) Anmelder: TSE Trailer-System-Engineering GmbH & Co. KG, 72365 Ratshausen (DE)
(72) Erfinder: Seifritz, Harald, 72364 Obernheim (DE)
(74) Vertreter: Weber, Gerhard

(57) **Zusammenfassung**

Für eine Hydraulikzylinderanordnung, insbesondere zur Verwendung bei einer Fahrzeug-Kippmuldenanordnung mit einer Abstützung des Hydraulikzylinders gegen ein Fahrzeugchassis über eine Schwenklageranordnung, wird vorgeschlagen, eine den Hydraulikzylinder in einer Lageranordnung abstützende Verbindungsanordnung in Form eines geteilten Ringes auszuführen. Der Ring besteht vorzugsweise aus zwei Teilkörpern (TK1, TK2), welche das Zylinderrohr umgreifen und durch gegenseitige Verschraubung gegen die Außenfläche des Zylinderrohres radial verspannt sind. Eine axiale Abstützung des Zylinderrohrs in der Verbindungsanordnung erfolgt vorteilhafterweise durch radial nach innen weisende Vorsprünge an den Innenwänden der Teilkörper und korrespondierende Vertiefungen in der Außenfläche des Zylinderrohres.

## Beschreibung

Die Erfindung betrifft eine Hydraulikzylinderanordnung.

Hydraulikzylinder umfassen zumindest ein äußeres Zylinderrohr und eine Kolbenstange, welche auch als Rohr ausgeführt sein kann, und in Richtung der Zylinderachse des Zylinderrohrs relativ zu diesem längsverschiebbar ist. Bei mehrstufigen Zylindern können in bekannter Weise zwischen dem äußeren Zylinderrohr und der Kolbenstange weitere Rohre angeordnet sein.

Das äußere Zylinderrohr kann in einem Schwenklager beweglich abgestützt sein, wobei der Verbindungskörper das Zylinderrohr umgibt und axial im Schwenklager abstützt. Der Verbindungskörper ist typischerweise ringförmig mit quer abstehenden Lagerzapfen ausgeführt. Das Zylinderrohr ist in der Regel in den Verbindungskörper eingesteckt oder eingeschraubt und mit diesem verschweißt. und mit dem Außenrohr verschweißt. Eine solche Hydraulikzylinderanordnung ist beispielsweise in bevorzugt mehrstufiger Ausführung bei einem Kippmuldenfahrzeug eingesetzt, um eine Kippmulde aus einer Transportstellung in eine Entleerungsstellung anzuheben. Dabei ist typischerweise das äußere Zylinderrohr über den ringförmigen Verbindungskörper mit dem an diesem vorhandenen Lagerzapfen in mit dem Fahrzeugchassis verbundenen Lagerschalen abgestützt und das über dem Zylinderkopf hinaus ragende ende der Kolbenstange ist mit der Kippmulde verbunden.

Die DE 196 01 258 A1 beschreibt eine Drehzapfenbefestigung an einem Zylinder, wobei parallel zum Zylinderrohr Zugstangen verlaufen und ein die Drehzapfen enthaltender geschraubter Rahmen an unterschiedlichen Längspositionen klemmend auf den Zugstangen fixiert werden kann. Bei einem in der DE 29 12 432 A1 beschriebenen Hydraulikzylinder ist ein solcher Rahmen aus zwei Hälften aufgebaut, welche das Zylinderrohr mit Spiel umgeben und jeweils zwei klemmbare Aufnahmen für die Zugstangen aufweisen. Die EP 0 495 848 B1, die DE 35 34 000 C2 und die JP 2007 139 187 A zeigen gleichfalls einen in Längsrichtung veränderlich positionierbaren Rahmen an einem Zylinder, wobei anstelle von Zugstangen der Zylinder an seiner Außenseite vier sich parallel zur Zylinderachse erstreckende und einteilig mit dem Zylinder als Profil ausgeführte Wulste aufweist, an welchen der Rahmen mit den Gelenkzapfen festklemmbar ist.

Der Erfindung liegt die Aufgabe zugrunde, eine vorteilhafte Hydraulikzylinderanordnung anzugeben.

Die Erfindung ist im unabhängigen Anspruch 1 beschrieben. Die abhängigen Ansprüche enthalten vorteilhafte Ausgestaltungen und Weiterbildungen der Erfindung.

Die Unterteilung der das äußere Zylinderrohr umgebenden Verbindungsanordnung in Umfangsrichtung in wenigstens zwei Teilkörper, welche miteinander verbunden sind und gemeinsam das äußere Zylinderrohr umgreifen und dann welchen das äußere Zylinderrohr formschlüssig axial abgestützt ist, ist insbesondere bei der Montage von besonderem Vorteil. Die ansonsten für einen stabilen axialen und radialen Sitz des Zylinderrohrs in der Verbindungsanordnung gebräuchliche Verschweißung des Zylinderrohrs kann entfallen. Die Teilkörper sind vorteilhafterweise radial gegen das äußere Zylinderrohr verspannt. Vorteilhafterweise sind die Teilkörper miteinander verschraubt, wobei die Verschraubung vorteilhafterweise mittels in Umfangsrichtung verlaufender Schrauben durch radial nach außen weisende Flansche der Teilkörper erfolgt.

Vorzugsweise sind genau zwei Teilkörper in der Verbindungsanordnung enthalten. In bevorzugter Ausführung mit einem um eine senkrecht zur Zylinderachse des Zylinderrohrs verlaufende Schwenkachse verschwenkbaren Hydraulikzylinder ist vorteilhafterweise je einer von zwei Lagerzapfen mit je einem der beiden Teilkörper verbunden und insbesondere einteilig mit diesem ausgeführt, insbesondere in Form eines Metallgusskörpers.

Die Teilkörper können in vorteilhafter Ausführung im wesentlichen gleich ausgeführt sein und Halbschalen um das Zylinderrohr bilden. Die Trennflächen, an welchen die Teilkörper miteinander verbunden sind, liegen vorteilhafterweise in einer die Zylinderachse enthaltenden Trennebene. Eine senkrecht zur Zylinderachse ausgerichtete Schwenkachse eines Schwenklagers verläuft vorteilhafterweise mit einem Winkel zwischen 30° und 60° geneigt gegen eine solche die Zylinderachse und die Trennflächen enthaltende Trennebene geneigt.

Zur formschlüssigen axialen Abstützung des äußeren Zylinderrohrs an den Teilkörpern der Verbindungsanordnung weisen die Teilkörper in vorteilhafter Ausführung radial nach innen in Richtung der Zylinderachse gerichtete Vorsprünge gegen die Zylindermantelfläche des äußeren Zylinderrohres auf. Solche Vorsprünge können beispielsweise die Kante des Zylinderrohrs an dessen dem Zylinderkopf des Hydraulikzylinders abgewandten Ende übergreifen. Vorteilhafterweise können solche Vorsprünge in einer von dem Rohrende beabstandeten Position angeordnet sein und in korrespondierende Vertiefungen gegen die Zylindermantelfläche des Zylinderrohres in dessen Außenwand eingreifen. Vorzugsweise sind dabei solche in Vertiefungen eingreifende Vorsprünge der Teilkörper axialer Richtung von den axial entgegengesetzten Enden der Teilkörper beabstandet und die Teilkörper sind vorteilhafterweise mit den Vorsprüngen axial beidseitig benachbarten Abschnitten gegen die Außenwand des Zylinderrohrs verspannt.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Schrägansicht eines Schwenklagerbereichs einer Hydraulikzylinderanordnung,
- Fig. 2: einen Schnitt durch Fig. 1 in einer Längsebene,
- Fig. 3: einen Schnitt durch den Lagerbereich in einer Querebene.

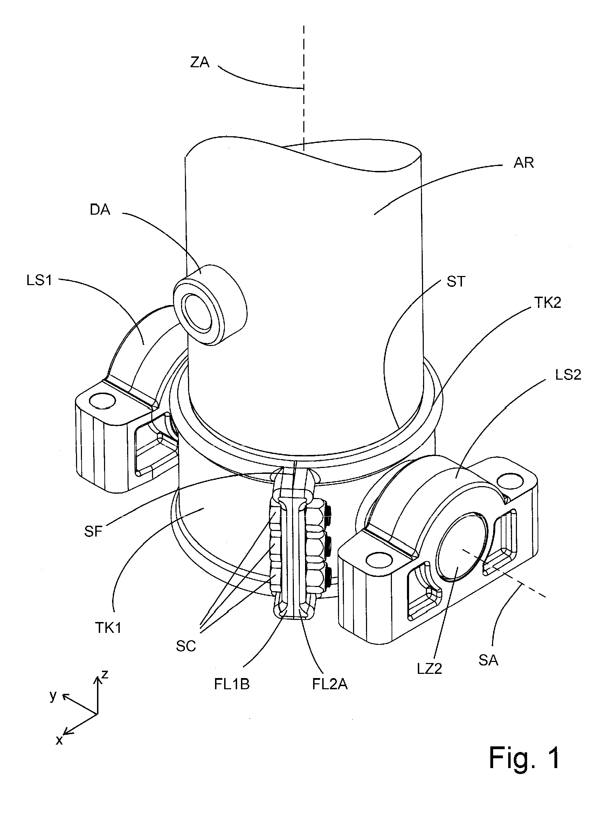

Fig. 1 zeigt eine Schrägansicht einer Hydraulikzylinderanordnung mit einem Schwenklager. Ein äußeres Zylinderrohr AR ist in einer Verbindungsanordnung gehalten. Die Verbindungsanordnung, welche das in Fig. 1 untere Ende des Zylinderrohrs AR mit Lagerschalen LS1, LS2 eines Schwenklagers verbindet, enthält zwei Teilkörper TK1, TK2, welche den unteren Endbereich des Zylinderrohres AR umgeben. Die Teilkörper TK1, TK2 sind als Halbschalen ausgebildet und sind an Trennflächen TF miteinander verbunden, vorzugsweise durch Schrauben SC miteinander verschraubt. In Fig. 1 ist lediglich ein Verschraubungsbereich sichtbar, der andere ist in verdeckter Position.

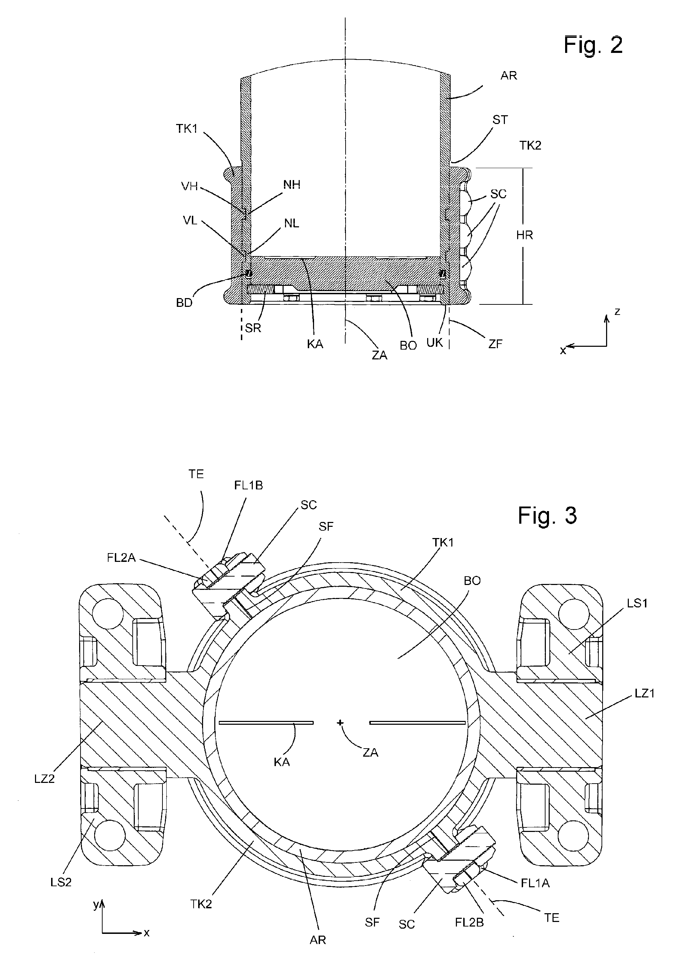

Aus dem Schnittbild nach Fig. 2 mit einer die Zylinderlängsachse ZA des äußeren Zylinderrohrs AR enthaltenden Schnittebene ist ersichtlich, dass das Zylinderrohr im wesentlichen über die gesamte Länge der Teilkörper TK1, TK2 in Längsrichtung mit den Teilkörpern TK1, TK2 überlappt und dass die Teilkörper TK1, TK2 mit ihren nach innen weisenden Flächen an der nach außen weisenden Fläche des Außenrohrs AR in Kontakt sind.

In den Figuren sind Koordinaten x, y, z eines rechtwinkligen x-y-z-Koordinatensystems mit eingezeichnet, wobei die Koordinate z in Richtung der Zylinderachse des Zylinderrohres AR, die Koordinate y in Richtung der Schwenkachse SA weist. Die zu y- und z-Achse orthogonale x-Achse verläuft in einer bevorzugten Anwendung der Hydraulikzylinderanordnung als Hebezylinder für eine Kippmulde auf einem Kippmuldenfahrzeug in Hauptfahrrichtung des Fahrzeugs und typischerweise überwiegend horizontal.

Fig. 3 zeigt einen Schnitt durch den unteren Bereich des Zylinderrohres mit den Teilkörpern TK1, TK2 und dem Schwenklager in einer quer zur Zylinderlängsachse verlaufenden x-y-Schnittebene. Die Teilkörper TK1, TK2 enthalten seitlich abstehend Lagerzapfen LZ1 bzw. LZ2, welche in Lagerbuchsen von Lagerschalen LS1, LS2 um die Schwenkachse SA drehbar gelagert sind. Die Lagerschalen LS1, LS2 sind in dem genannten bevorzugten Anwendungsfall mit dem Chassis eines Kippmuldenfahrzeugs verbunden.

Die beiden Teilkörper TK1, TK2 bilden einen Ringkörper um das Zylinderrohr, welcher entlang einer Trennebene TE in die beiden Teilkörper aufgeteilt ist. In Umfangsrichtung um das Zylinderrohr treten zwei Stoßfugen SF auf, an welchen sich die beiden Teilkörper in geringem Abstand gegenüber stehen oder auch gegeneinander verspannt aneinander anliegen können. Zur Verbindung der beiden Teilkörper untereinander besitzen diese im Bereich der Stoßfugen nach außen vorspringende Flansche FL1A, FL1B bzw. FL2A, FL2B. Durch in Umfangsrichtung verlaufende Öffnungen der Flansche sind Schrauben SC hindurch geführt, welche eine Verschraubung zur Verspannung der beiden Teilkörper gegeneinander dienen. Bei einer solchen Verspannung der beiden Teilkörper an den Stoßfugen SF gegeneinander wird zugleich eine Verspannung der bezüglich der Zylinderachse ZA radial nach innen weisenden Wände der Teilkörper gegen die Außenwand des Zylinderrohres AR bewirkt. Vorzugsweise liegen die Innenwände der Teilkörper TK1 großflächig an der Außenfläche des Zylinderrohres AR in unterem Bereich an. Für einen definierten und auf die Dimension der Teilkörper TK1, TK2 genau abgestimmten Radius der Außenwand des Zylinderrohres AR in dem von den Teilkörpern TK1, TK2 umgebenen Längsbereich des Zylinderrohres kann dieses, wie insbesondere in Fig. 2 ersichtlich, in dem Längsbereich der Teilkörper um ein geringes Maß abgedreht sein, wodurch im Außenmantel des Zylinderrohrs AR eine Stufe ST entsteht. Als Zylindermantelfläche ZF des Zylinderrohres AR sei eine Kreiszylinderfläche mit dem Radius des abgedrehten Bereichs um die Zylinderachse ZA bezeichnet.

Durch die Verschraubung der beiden Teilkörper ergibt sich eine sehr einfache Montage der Verbindungsanordnung mit dem Zylinderohr, wobei insbesondere keine Verschweißung erforderlich wird. Dies vereinfacht zum einen den Montagevorgang und erlaubt zudem ein zerstörungsfreies Lösen der Verbindungsanordnung von dem Zylinderrohr für eine Auswechslung von schadhaften Teilen. Durch die bevorzugte Verspannung der Teilkörper TK1, TK2 radial gegen die Außenfläche des Zylinderrohres AR ist dieses quer zur Längsachse auf einfache und zuverlässige Weise sicher und spielfrei gehalten. Insbesondere werden auch die beim Verschweißen auftretenden Spannungen im Metall des Zylinderrohres vermieden.

Für die axiale Abstützung des Zylinderrohres AR in der Verbindungsanordnung sind vorteilhafterweise an den Teilkörpern bezüglich der Zylinderachse ZA radial nach innen weisende Vorsprünge gegenüber der Kreiszylinderfläche ZF vorgesehen. In der in Fig. 2 ersichtlichen bevorzugten Ausführung ist hierfür wenigstens ein solcher Vorsprung, vorzugsweise zwei Vorsprünge VH und VL, in von der Unterkante UK des Zylinderrohres beabstandeter Position vorgesehen, wobei solche Vorsprünge in korrespondierende Vertiefungen NH bzw. NL des Zylinderrohres AR gegen die Kreiszylinderfläche ZF eingreifen und hierdurch eine formschlüssige Festlegung des Zylinderrohres AR in axialer Richtung in den verbundenen Teilkörpern TK1, TK2 bewirken. Vorzugsweise sind die Vertiefungen NL, NH durch umlaufende Nuten in der Außenwand des Zylinderrohres AR gebildet und die Vorsprünge VH bzw. VR sind durch von den Innenflächen der Teilkörper TK1, TK2 vorspringende Kreisringsegmente gebildet. Die Tiefe der vorzugsweise nutenförmigen Vertiefungen NL, NH in radialer Richtung gegen die Kreiszylinderfläche ZF beträgt vorteilhafterweise weniger als die Hälfte der Wandstärke des Zylinderrohres AR in dem von den Teilkörpern umfassten Bereich. Die im Bereich der Vertiefungen NL, NH verringerte Wandstärke ist mechanisch unproblematisch, da das Außenrohr in den Vertiefungen axial in beiden Richtungen beabstandeten Bereichen eng durch die Teilkörper umfasst und zwischen diese eingespannt ist. Die Vorsprünge sind hierfür vorteilhafterweise von beiden axialen Enden der Teilkörper TK1, TK2, deren axiale Höhe in Fig. 2 mit HR eingetragen ist, beabstandet.

Eine axiale Abstützung kann in nicht skizzierter Weise auch durch einen Vorsprung radial nach innen von den Teilkörpern TK1, TK2 gegen die Zylinderfläche ZF an einer die Unterkante UK des Zylinderrohres untergreifenden Position vorgesehen sein. Durch die von der Unterkante des Zylinderrohrs beabstandeten, ineinander greifenden Strukturen VH, VL, NH, NL ergibt sich vorteilhafterweise auch gegen in axialer Richtung, in Fig. 2 auf das Zylinderrohr nach oben, wirkende ausziehende Kräfte auf das Zylinderrohr. Die Teilung der Verbindungsanordnung in wenigstens zwei Teilkörper ermöglicht auf besonders vorteilhafte Weise eine solche formschlüssige axiale Abstützung.

Die Hydraulikzylinderanordnung ist in bevorzugter Ausführung mehrstufig mit einem oder mehreren Zwischenrohren zwischen dem äußeren Zylinderrohr AR und einer die letzte Stufe bildenden Kolbenstange, welche gleichfalls als Rohr ausgebildet sein kann. Solche weiteren Stufen sind in den Figuren der Übersichtlichkeit halber nicht mit eingezeichnet.

Für die Verschraubung der Teilkörpern untereinander an den Stoßfugen SF sind vorteilhafterweise in axialer Richtung z über die Höhe HR der Teilkörper TK1, TK2 gegeneinander beabstandet mehrere Schrauben SC in jeweils einzelnen Öffnungen in den Flanschen vorgesehen.

In nicht skizzierter Ausführung kann auch eine der beiden Schraubverbindungen durch eine Gelenkverbindung, insbesondere nach Art eines Scharniers zwischen den beiden Teilkörpern ausgebildet sein, um welche die beiden Teilkörper relativ zueinander verschwenkbar sind.

In Fig. 1 ist noch die an sich gebräuchliche Befestigung einer Zylinderbodenplatte BO im unteren Endbereich des Zylinderrohres AR mittels einer Stützringanordnung SR dargestellt. Die Stützringanordnung SR liegt in einer in die Innenfläche des Zylinderrohres AR nahe dessen Unterkante eingefräster Nut ein und ist mit der Bodenplatte BO verschraubt. Für die bevorzugte mehrstufige Ausführung der Hydaulikzylinderanordnung sind in gebräuchlicherweise in der im Fluidraum zuweisenden Seite der Bodenplatte BO Kanäle KA als Vertiefungen eingebracht. Eine in einer weiteren Vertiefung gegen die Innenfläche des Außenrohrs einliegende Ringdichtung BD dichtet den Spalt zwischen der Bodenplatte BO und der Innenwand des Zylinderrohres AR fluiddicht ab.

In Fig. 1 ist an der Außenseite des Zylinderrohres AR ein Druckmittelanschluss DA zur Zuleitung und Abführung von einer Hydraulikflüssigkeit dargestellt.

Die Trennebene TE, welche durch die Stoßfugen SF verläuft, enthält vorteilhafterweise die Zylinderachse ZA. Die Teilkörper TK1, TK2 können vorteilhafterweise im wesentlichen gleich aufgebaut sein. Die Trennebene TE ist vorteilhafterweise gegen die Schwenkachse SA um einen Winkel in der Größe zwischen 30° und 60° geneigt, wodurch sich eine besonders günstige Anordnung der Flansche mit den Verschraubungen ergibt und die Baulänge der Verbindungsanordnung in x-Richtung besonders gering gehalten werden kann, was bei der bevorzugten Anwendung in einem Kippmuldenfahrzeug aufgrund der durch die vielen anderen Komponenten gegebenen Platzbeschränkungen von Vorteil ist.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Hydraulikzylinderanordnung mit einem in einem Schwenklager schwenkbar abgestützten äußeren Zylinderrohr und einer Verbindungsanordnung zwischen dem Zylinderrohr und dem Schwenklager, **dadurch gekennzeichnet, dass** die Verbindungsanordnung in Umfangsrichtung in wenigstens zwei Teilkörpern unterteilt ist, welche das Zylinderrohr umgreifen und miteinander verbunden sind, und dass das Zylinderrohr formschlüssig axial an den Teilkörpern abgestützt ist.

2. Anordnung nach Anspruch 1, **dadurch gekennzeichnet, dass** Verbindungen der Teilkörper untereinander und mit dem Zylinderrohr zerstörungsfrei lösbar sind.

3. Anordnung nach Anspruch 1 oder 2, **dadurch gekennzeichnet, dass** die Teilkörper miteinander verschraubt sind.

4. Anordnung nach einem der Ansprüche 1 bis 3, **dadurch gekennzeichnet, dass** die Teilkörper radial gegen das Zylinderrohr verspannt sind.

5. Anordnung nach einem der Ansprüche 1 bis 4, **dadurch gekennzeichnet, dass** Trennflächen zwischen verbundenen Teilkörpern in einer die Zylinderachse des Zylinderrohrs enthaltenden Ebene liegen.

6. Anordnung nach einem der Ansprüche 1 bis 5, **dadurch gekennzeichnet, dass** je einer von zwei Lagerzapfen eines Schwenklagers mit je einem Teilkörper fest verbunden ist und die beiden Lagerzapfen eine gemeinsame Schwenkachse bilden.

7. Anordnung nach Anspruch 5 und 6, **dadurch gekennzeichnet, dass** die Schwenkachse um 30° bis 60° gegen die Trennfläche geneigt verläuft.

8. Anordnung nach einem der Ansprüche 1 bis 7, **dadurch gekennzeichnet, dass** zur formschlüssigen axialen Abstützung des Zylinderrohrs an den Teilkörpern Haltestrukturen ausgebildet sind, welche gegen die Zylindermantelfläche des Zylinderrohrs radial nach innen zur Zylinderachse hin weisende Vorsprünge enthalten.

9. Anordnung nach Anspruch 8, **dadurch gekennzeichnet, dass** die Vorsprünge der Haltestrukturen in korrespondierende Vertiefungen in der Außenfläche des Zylinderrohrs eingreifen.

10. Anordnung nach Anspruch 1 bis 9, **gekennzeichnet durch** ihre mehrstufige Ausführung.

11. Anordnung nach einem der Ansprüche 1 bis 10, **gekennzeichnet durch** ihre Verwendung auf einem Fahrzeug für die Bewegung eines kippbaren Behälters.
